# DEMANDE DE BREVET EUROPEEN

(11) **EP 4 764 289 A1**
(43) Date de publication de la demande: **24.06.2026**
(21) Numéro de dépôt: 25224128.6
(22) Date de dépôt: 16.12.2025
(51) Int. Cl.: F16L 47/10, F16L 21/02, F16J 15/10, F16L 23/16

(54) **CONNECTEUR ET SYSTÈME DE RACCORDEMENT CORRESPONDANT**

(30) Priorité: 19.12.2024 FR 2414781
(71) Demandeur: Nobel Plastiques, 78630 Orgeval (FR)
(72) Inventeur: VARLET, Stéphane, 52100 SAPIGNICOURT (FR); MILHAS, Pierre, 51300 VITRY-LE-FRANCOIS (FR)
(74) Mandataire: Cabinet Boettcher

(57) **Abrégé**

Connecteur pour système de raccordement, le connecteur comprenant une base comprenant une bride (13) prolongée par un premier côté d'un tube (16) et par un deuxième côté, opposé au premier côté, par une interface de connexion (17) destinée à être associée à un connecteur femelle du système de raccordement fluidique, la base étant au moins en partie en matière plastique, le connecteur comportant une capsule (28), également au moins en partie en matière plastique, la capsule étant agencée sur la base par l'intermédiaire d'au moins une bague (23) élastiquement déformable du connecteur, la capsule présentant ainsi une portion d'attache à la base prolongée par une interface de connexion, un orifice (19) étant ménagé dans le connecteur de sorte à traverser au moins la capsule et la base.

Système de raccordement associé.

## Description

La présente invention concerne un connecteur.

La présente invention concerne également un système de raccordement comprenant un tel connecteur.

### ARRIERE PLAN DE L'INVENTION

Par contrainte environnementale et/ou sécuritaire, certains fluides ne doivent pas être dégagés dans l'atmosphère comme par exemple des fluides réfrigérants (tels que le fluide réfrigérant R1234) ou bien encore l'hydrogène. Ainsi, dans des applications de transfert de tels fluides, i.e. de fluides à haut risque de perméabilité, les systèmes de raccordement entre deux éléments doivent être particulièrement étanches.

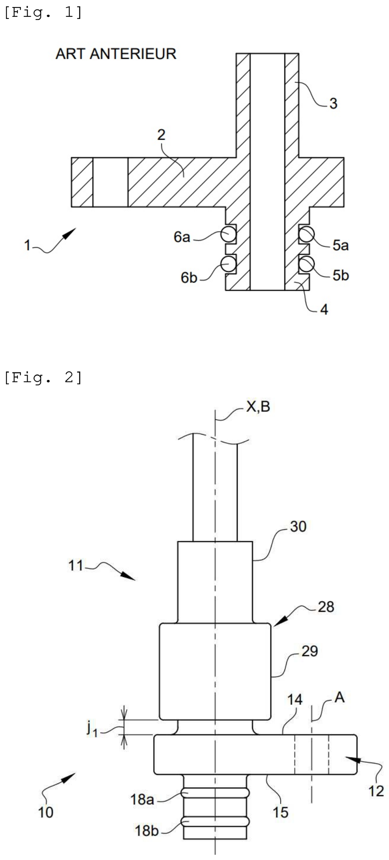

En référence à la figure 1 est illustré un connecteur mâle 1 de l'art antérieur.

Un tel connecteur comprend une bride 2 pour sa fixation à un connecteur femelle, bride 2 prolongée en partie supérieure par un tube 3 et en partie inférieure par une interface de connexion 4 tubulaire. Une ou plusieurs gorges 5a, 5b sont ménagées extérieurement sur l'interface de connexion tubulaire afin de pouvoir y installer un ou plusieurs joints 6a, 6b toriques, joints 6a, 6b assurant l'étanchéité de la connexion entre le connecteur mâle 1 et le connecteur femelle.

Un tel connecteur mâle 1 est usuellement en acier inoxydable ou en aluminium et est d'une seule pièce. Ainsi, la bride 2, le tube 3 et l'interface de connexion 4 forment une seule et unique pièce, usuellement en métal.

Un tel connecteur mâle 1, bien qu'efficace d'un point de vue de l'étanchéité, présente l'inconvénient d'être rigide ce qui complexifie son montage dans des installations de transport de fluide.

### OBJET DE L'INVENTION

L'invention a notamment pour but de proposer une solution permettant de faciliter la mise en place d'un système de raccordement dans une installation de transport de fluide (gaz et/ou liquide).

### RESUME DE L'INVENTION

A cet effet, on prévoit, selon l'invention, un connecteur pour système de raccordement, le connecteur comprenant une base comprenant une bride prolongée par un premier côté d'un tube et par un deuxième côté, opposé au premier côté, par une interface de connexion destinée à être associée à un deuxième connecteur du système de raccordement fluidique.

Selon l'invention, la base est au moins en partie en matière plastique et le connecteur comporte une capsule, également au moins en partie en matière plastique, agencée sur la base, la capsule présentant ainsi une portion d'attache à la base prolongée par une interface de connexion, un orifice étant ménagé dans le connecteur de sorte à traverser au moins la capsule et la base, au moins une bague élastiquement déformable du connecteur étant agencée au moins en partie entre la capsule et la base, la capsule n'étant agencée sur la base que via la bague de sorte qu'aucune portion de la capsule ne soit en contact direct avec la base.

L'invention permet ainsi de rendre le système de raccordement l'incorporant plus souple, ce qui facilite le montage du système de raccordement dans des installations de transport de fluides.

De plus, l'invention s'avère particulièrement avantageuse dans des environnements exigeants, notamment soumis à des vibrations. En effet l'invention s'avère moins sensibles aux vibrations que les systèmes de l'art antérieur. L'invention vieillit ainsi moins rapidement.

Par ailleurs, une telle invention s'avère relativement légère et/ou peu coûteuse à produire.

Pour la présente demande par « matière plastique », on entend tout matériau comprenant un pourcentage non nul d'au moins un plastique. La « matière plastique » peut donc également incorporer d'autres éléments que du plastique comme par exemple des fibres de renfort et par exemple des fibres de verre.

Optionnellement, la bague est au moins en partie en élastomère.

Optionnellement, dans lequel la bague et le tube sont pourvus de moyens d'accouplement et/ou dans lequel la bague et la capsule sont pourvus de leur moyens d'accouplement. Optionnellement, les moyens d'accouplement comportent au moins un couple organe mâle/organe femelle, l'organe mâle étant porté par un premier élément choisi parmi la bague, le tube ou la capsule et l'organe femelle étant porté par un deuxième élément, différent du premier élément, deuxième élément choisi parmi la bague, le tube ou la capsule, sa-chant que soit l'organe mâle soit l'organe femelle est porté par la bague.

Optionnellement, l'organe mâle est conformé en un boudin apte à venir s'insérer dans une rainure formée par l'organe femelle.

Optionnellement, la rainure est arrondie ou tronconique. Optionnellement, l'organe mâle et/ou l'organe femelle s'enroule en hélice autour de l'élément le portant. Optionnellement, le connecteur comporte une conduite fixée à l'interface de connexion de la capsule, la capsule entourant extérieurement un tronçon de ladite conduite. Optionnellement, la conduite est uniquement en contact avec la capsule dans le connecteur.

Optionnellement, le système présente un jeu entre la bague et la bride d'une part et entre la capsule et la bride d'autre part.

Optionnellement, la capsule ne repose sur la base que par l'intermédiaire de la bague.

L'invention concerne également un système de raccordement comprenant un connecteur tel que précité, le connecteur étant un premier connecteur, et un deuxième connecteur inséré dans ledit premier connecteur.

D'autres caractéristiques et avantages de l'invention ressortiront à la lecture de la description qui suit de modes de réalisation particuliers et non limitatifs de l'invention.

### BREVE DESCRIPTION DES DESSINS

Il sera fait référence aux dessins annexés, parmi lesquels :
[Fig. 1] la figure 1 est une vue en coupe axiale d'un connecteur mâle de l'art antérieur ;
[Fig. 2] la figure 2 est une vue de face d'un connecteur selon un premier mode de réalisation de l'invention ;
[Fig. 3] la figure 3 est une vue en coupe axiale du connecteur illustré à la figure 2 ;
[Fig. 4] la figure 4 est une vue en perspective d'un système de raccordement comprenant le connecteur illustré à la figure 2 ;
[Fig. 5] la figure 5 est une vue éclatée du système de raccordement illustré à la figure 4 ;
[Fig. 6] la figure 6 est une vue en perspective d'un système de raccordement incorporant un connecteur selon un troisième mode de réalisation de l'invention ;
[Fig. 7] la figure 7 est une vue en coupe axiale d'un connecteur selon un deuxième mode de réalisation de l'invention.

### DESCRIPTION DETAILLEE DE L'INVENTION

En référence aux figures 2 à 5, un système de raccordement 10 selon un premier mode de réalisation de l'invention va être décrit.

Le système de raccordement 10 comporte un premier connecteur 11. Le premier connecteur 11 comprend une base 12 comprenant une bride 13 de fixation présentant deux faces principales 14, 15. De préférence, les deux faces principales 14, 15 sont parallèles entre elles. La bride 13 est ici de forme semi-ovale.

La base 12 comporte par ailleurs un tube 16 s'étendant axialement selon un premier axe X depuis une première des faces principales 14 de la bride 13 en direction opposée à la deuxième face principale 15. Par exemple, le premier axe X forme une normale au plan dans lequel s'étend la première face principale 14 et/ou la deuxième face principale 15.

Le tube 16 n'est pas ici centré sur la bride 13. Par exemple le tube 16 s'étend à partir d'une première extrémité longitudinale de la bride 13.

La base 12 comporte par ailleurs une interface de connexion 17 s'étendant axialement depuis la deuxième face principale 15 en direction opposée à la première face principale 14. De préférence, l'interface de connexion 17 s'étend axialement selon un axe parallèle ou confondu avec le premier axe X. Dans le cas présent, l'interface de connexion 17 s'étend axialement selon le premier axe X. L'interface de connexion 17 et le tube 16 s'étendent ainsi coaxialement l'un par rapport à l'autre.

L'interface de connexion 17 est de préférence de forme tubulaire.

Au moins une gorge, et dans le cas présent deux gorges 18a, 18b, sont ménagées sur le pourtour externe de l'interface de connexion 17. Au moins une gorge entoure à 360 degrés l'interface de connexion 17. Au moins une gorge est une rainure de forme arrondie et par exemple une rainure dont la section radiale est en arc de cercle et par exemple en demi-cercle.

Un premier orifice 19 s'étend à travers la base 12. En particulier, le premier orifice 19 s'étend successivement à travers le tube 16, la bride 13 et l'interface de connexion 17. De préférence, le premier orifice 19 s'étend axialement selon un axe parallèle ou confondu avec le premier axe X. Dans le cas présent, le premier orifice 19 s'étend axialement selon le premier axe X. Le premier orifice 19 et l'interface de connexion 17 et le tube 16 s'étendent ainsi coaxialement les uns par rapport aux autres. Le premier orifice 19 est ici centré dans le tube 16 et l'interface de connexion 17.

Par ailleurs, la bride 13 est pourvue d'au moins un deuxième orifice 20 la traversant également, tout comme le premier orifice 19. Le deuxième orifice 20 s'étend toutefois hors du tube 16 et de l'interface de connexion 17. Le deuxième orifice 20 débouche ainsi à une première extrémité à niveau de la première face longitudinale 14 et à une deuxième extrémité à niveau de la deuxième face longitudinale 15.

De préférence, le deuxième orifice 20 s'étend axialement selon un deuxième axe A parallèle mais non confondu avec le premier axe X. Dans le cas présent, le deuxième orifice 20 est ainsi décalé du premier orifice 19.

Le deuxième orifice 20 n'est pas ici centré sur la bride 13. Par exemple le deuxième orifice 20 s'étend dans une deuxième extrémité longitudinale de la bride 13.

La base 12 est au moins en partie en matière plastique. De préférence, toute la base 12 est en matière plastique.

La matière plastique est par exemple à base de ou en nylon. La matière plastique est par exemple un composite avec une matrice à base de plastique (nylon par exemple) renforcée de fibres (et par exemple des fibres de verre). De préférence, le tube 16, l'interface de connexion 17 et la bride 13 sont d'un seul tenant. La base 12 est donc formée d'une seule pièce. La base 12 est ainsi par exemple obtenue par moulage.

Le premier connecteur 11 comporte de préférence au moins un insert 21 agencé à l'intérieur du deuxième orifice 20. Par exemple, l'insert 21 est en métal. Par exemple la base 12 est surmoulée sur l'insert 21.

Le premier connecteur 11 comporte de préférence au moins un joint torique agencé dans une gorge de l'interface de connexion. Dans le cas présent, le connecteur 11 comporte deux joints toriques 22a, 22b, chaque joint torique 22a, 22b étant agencé dans une des gorges 18a, 18b de l'interface de connexion.

Le premier connecteur 11 comporte par ailleurs une bague 23 élastiquement déformable agencée sur la base 12. La bague 23 est plus particulièrement ici agencée sur le tube 16 de la base 12. La bague 23 est donc agencée sur le tube 16, extérieurement à celui-ci. En particulier, la bague 23 entoure à 360 degrés le tube 16 sur au moins un tronçon de celui-ci.

Par exemple, la bague 23 s'étend axialement le long du tube 16 de sorte qu'une première extrémité axiale de la bague 23 touche la bride 13 et/ou de sorte que la première extrémité de la bague 23 s'étende sans toucher la bride 13. Il y aura alors dans ce dernier cas un jeu j₁ entre la bague 12 et la bride 13 (le jeu étant mesuré selon le premier axe X). Ce jeu j₁ est par exemple compris entre 0 (non compris) et 5 millimètres.

Par exemple, la bague 23 s'étend axialement le long du tube 16 de sorte qu'une deuxième extrémité axiale de la bague 23 s'étende au-delà d'une extrémité axiale libre du tube 16. De préférence, ladite deuxième extrémité axiale présente un rebord 24 venant couvrir au moins en partie au moins une face supérieure 25 de ladite extrémité axiale libre. Par exemple, ladite face supérieure 25 dessine un anneau plat. De manière correspondante, le rebord 24 forme un anneau plat reposant sur l'anneau plat formant la face supérieure 25. Le contact entre le rebord 24 et la face supérieure 25 est alors un contact plan/plan.

De préférence, toute la face supérieure 25 est recouverte par la deuxième extrémité axiale de la bague 23. Bien entendu, le premier orifice 19 n'est pas recouvert par ladite deuxième extrémité axiale de la bague 23.

La bague 23 est de préférence agencée de sorte à s'étendre axialement selon un axe parallèle ou confondu avec le premier axe X. Dans le cas présent, la bague 23 s'étend axialement selon le premier axe X. La bague 23 et le tube 16 s'étendent ainsi coaxialement l'un par rapport à l'autre. La bague 23 est ainsi centrée sur le tube 16.

La bague 23 est de préférence formée d'une seule pièce. La bague 23 est en ou à base d'au moins un élastomère. La base 23 est par exemple en ou base d'au moins l'un des composants suivants : EPDM, NBR, HNBR, etc.

De préférence, la bague 23 et le tube 16 sont pourvus de moyens d'accouplement. Par exemple, les moyens d'accouplement comportent au moins un couple organe mâle 26 / organe femelle 27, au moins l'un des organes mâle 26 ou femelle 27 étant porté par la bague 23 et l'autre des organes mâle 26 ou femelle 27 étant porté par le tube 16. Par exemple, l'organe femelle 26 est une gorge et l'organe mâle 27 est un boudin apte à venir s'insérer dans la gorge. Par exemple la gorge est une rainure de forme arrondie et par exemple une rainure dont la section radiale est en arc de cercle et par exemple en demi-cercle.

De préférence, l'organe mâle 26 est d'un seul tenant avec l'élément le portant (tube 16 ou bague 23). De préférence, l'organe femelle 27 est ménagé directement dans l'élément le portant (tube 16 ou bague 23).

De préférence, au moins l'un des organes d'accouplement est conformé de sorte à s'enrouler hélicoïdalement autour de l'élément le portant (le pas de vis de l'hélice étant ou non régulier).

Ceci permet par exemple de faciliter la fabrication de la bague 23 et/ou de la base 12. Ceci permet par exemple d'augmenter les surfaces de contact entre la bague 23 et la base 12 améliorant la tenue en place de la bague 23 sur la base 12.

Par exemple l'organe mâle 26 s'enroule hélicoïdalement autour de l'élément associé et l'organe femelle 27 associé forme une rainure correspondante ménagée hélicoïdalement autour de l'élément associé. Par exemple, au moins l'un des organes d'accouplement effectue au moins un tour autour de l'élément le portant et optionnellement au moins deux tours et optionnellement au moins trois tours.

De préférence, l'organe mâle 26 entoure hélicoïdalement l'élément le portant sur toute la hauteur de celui-ci (selon le premier axe X) et/ou l'organe femelle 27 entoure hélicoïdalement l'élément le portant sur toute la hauteur de celui-ci (selon le premier axe X).

Une gorge hélicoïdale à pas régulier est ici ménagée dans le pourtour externe du tube 16. De manière correspondante, la bague 23 comporte une boudin hélicoïdal à pas régulier agencé sur le pourtour interne de la bague 23.

Lorsque la bague 23 est en place sur le tube 16, elle recouvre donc extérieurement un tronçon supérieur du tube 16 ainsi que la face supérieure 24 dudit tube 16. Le premier orifice 19 s'étend ainsi également à travers la bague 23 qui est agencée autour du tube 16.

De manière avantageuse, le boudin pouvant localement se déformer en cas de déplacement relatif entre la bague 23 et le tube 16.

Le premier connecteur 11 comporte par ailleurs une capsule 28 agencée sur la base 12.

La capsule 28 est plus particulièrement ici agencée sur le tube 16. La capsule 28 est donc agencée sur le tube 16, extérieurement à celui-ci. En particulier, la capsule 28 entoure à 360 degrés le tube sur au moins un tronçon de celui-ci.

Par exemple, la capsule 28 s'étend axialement le long du tube 16 de sorte qu'une première extrémité axiale de la capsule 28 touche la bride 13 et/ou de sorte que la première extrémité axiale de la capsule 28 s'étende sans toucher la bride 13. Il y aura alors dans ce dernier cas un jeu entre la capsule 28 et la bride 13 (le jeu étant mesuré selon le premier axe X). Ce jeu sera alors par exemple compris entre 0 (non compris) et 5 millimètres. Ce jeu sera par exemple égal à j₁.

Par exemple, la capsule 28 s'étend axialement le long du tube 16 de sorte qu'une deuxième extrémité axiale de la capsule 28 s'étende au-delà de l'extrémité axiale libre du tube 16.

La capsule 28 est de préférence agencée de sorte à s'étendre axialement selon un axe qui est parallèle ou confondu avec le premier axe X. Dans le cas présent, la capsule 28 s'étend axialement selon le premier axe X. La capsule 28 et le tube 16 s'étendent ainsi coaxialement l'un par rapport à l'autre. La capsule 28 est ainsi centrée sur le tube 16.

Dans les faits, la capsule 28 n'est pas en contact direct avec le tube 16. En effet, la bague 23 est agencée entre le tube 16 et la capsule 28.

La capsule 28 est ainsi agencée sur la bague 23. La capsule 28 est ici en contact direct avec la bague 23 i.e. aucune pièce intermédiaire n'est agencée entre la bague 23 et la capsule 28 pour au moins une zone de la capsule 28.

La capsule 28 est donc agencée sur la bague 23, extérieurement à celle-ci. En particulier, la capsule 28 entoure à 360 degrés la bague 23 sur au moins un tronçon de celui-ci.

Par exemple, la capsule 28 s'étend axialement le long de la bague 23 de sorte que la première extrémité axiale de la capsule 28 arrive à niveau de la première extrémité axiale de la bague 23. De préférence, la première extrémité axiale de la bague 23 et la première extrémité axiale de la capsule 28 s'étendent dans un même plan.

Par exemple, la capsule 28 s'étend axialement le long de la bague 23 de sorte qu'une deuxième extrémité axiale de la capsule 28 s'étende au-delà de la deuxième extrémité axiale de la bague 23.

On comprend donc qu'aucune portion de la capsule 28 n'est en contact direct avec le tube 16 ou la bride 13, ou la base 12 de manière générale. La capsule 28 n'est donc agencée sur la base 12 que via la bague 23.

On comprend également que la capsule 28 et la bague 23 s'étendent coaxialement l'une par rapport à l'autre. La capsule 28 est ainsi centrée sur la bague 23.

La capsule 28 est ici conformée de sorte à présenter une portion d'attache 29 à la base 12, portion d'attache 29 prolongée par une interface de connexion 30.

La capsule 28 est ici conformée en un solide de révolution autour d'un axe B. L'axe B est de préférence confondu avec l'axe X lorsque la capsule 28 est en place sur la bague 23. La portion d'attache 29 est ici conformée en un cylindre de même que l'interface de connexion 30.

La portion d'attache 29 présente une section transversale (optionnellement en anneau plat) dont le diamètre externe (le diamètre étant à prendre au sens mathématique le plus large dans la présente demande) est plus important que celui de la section transversale (optionnellement en anneau plat) de l'interface de connexion 30. Ainsi la portion d'attache 29 et l'interface de connexion 30 forment conjointement un épaulement 31 de la capsule 28. L'épaulement 31 est ainsi agencé sur la surface externe de la capsule 28. L'épaulement 31 peut être droit ou présenter un congé. La capsule 28 se rétrécit donc en direction opposée à la base 12.

Dans les faits, c'est donc la portion d'attache 29 qui est agencée sur le tube 16 de sorte que la première extrémité axiale de la portion d'attache 29 soit celle à niveau de la première extrémité d'attache de la bague 23. La deuxième extrémité axiale de la portion d'attache 29 forme l'épaulement 31 avec la première extrémité axiale de l'interface de connexion 30.

L'épaulement 31 est conformé de sorte à venir recouvrir au moins en partie le rebord 24 de la bague 23. Dans le cas présent, ledit rebord 24 dessine un anneau plat et de manière correspondante l'épaulement 31 dessine un anneau plat reposant sur ledit rebord 24. Le contact entre le rebord 24 et l'épaulement est alors un contact plan/plan.

De préférence, toute ledit rebord 24 est recouverte par la capsule 28 et notamment par son épaulement 31. Bien entendu, le premier orifice 19 n'est pas recouvert par la capsule 28.

On comprend donc que l'interface de connexion 30 s'étend quant à elle entièrement au-delà de la bague 23 selon le premier axe X.

De préférence, la bague 23 et la capsule 28 sont pourvues de moyens d'accouplement. Par exemple, les moyens d'accouplement comportent au moins un couple organe mâle 32 /or-gane femelle 33, au moins l'un des organes mâle 32 ou femelle 33 étant porté par la bague 23 et l'autre des organes mâle 32 ou femelle 33 étant porté par la capsule 28. Dans le cas présent, c'est la portion d'attache 29 de la capsule 28 qui porte le ou les organes d'accouplement de la capsule 28. Par exemple, l'organe femelle 33 est une gorge et l'organe mâle 32 est un boudin apte à venir s'insérer dans la gorge. Par exemple la gorge est une rainure de forme arrondie et par exemple une rainure dont la section radiale est en arc de cercle et par exemple en demi-cercle.

De préférence, l'organe mâle 32 est d'un seul tenant avec l'élément le portant (capsule 28 ou bague 23). De préférence, l'organe femelle 33 est ménagé directement dans l'élément le portant (capsule 28 ou bague 23).

De préférence, au moins l'un des organes d'accouplement est conformé de sorte à s'enrouler hélicoïdalement autour de l'élément le portant (le pas de vis de l'hélice étant ou non régulier).

Ceci permet de faciliter la fabrication de la capsule 28. Ceci permet par exemple d'augmenter les surfaces de contact entre la bague 23 et la capsule 28 améliorant la tenue en place de la capsule 28 sur la bague 23.

Par exemple l'organe mâle 32 s'enroule hélicoïdalement autour de l'élément associé et l'organe femelle 33 associé forme une rainure correspondante ménagée hélicoïdalement autour de l'élément associé. Par exemple, au moins l'un des organes d'accouplement effectue au moins un tour autour de l'élément le portant et optionnellement au moins deux tours et optionnellement au moins trois tours. De préférence, l'organe mâle 32 entoure hélicoïdalement l'élément le portant sur toute la hauteur de celui-ci (selon le premier axe X) et/ou l'organe femelle 33 entoure hélicoïdalement l'élément le portant sur toute la hauteur de celui-ci (selon le premier axe X).

Une gorge hélicoïdale à pas régulier est ici ménagée dans le pourtour interne de la capsule 28. De manière correspondante, la bague 23 comporte une boudin hélicoïdal à pas régulier agencé sur le pourtour externe de la bague 23. Lorsque la capsule 28 est en place sur la bague 23, elle recouvre donc extérieurement un tronçon supérieur de la bague 23 ainsi que la face supérieure de ladite bague 23. Le premier orifice 19 s'étend ainsi également à travers la capsule 28 qui est agencée autour de la bague 23 et en particulier s'étend à travers la capsule 28 sur toute la hauteur de celle-ci (hauteur considérée selon l'axe X). On comprend donc que le premier orifice 19 s'étend successivement à travers la capsule 28, la bague 23 et la base 12. De manière avantageuse, la bague 23 étant élastiquement déformable, le boudin peut localement se déformer lors du déplacement relatif entre la bague 23 et la capsule 28. La capsule 28 est au moins en partie en matière plastique. De préférence, toute la capsule 28 est en matière plastique. La matière plastique en ou à base de nylon.

La capsule est par exemple obtenue par moulage.

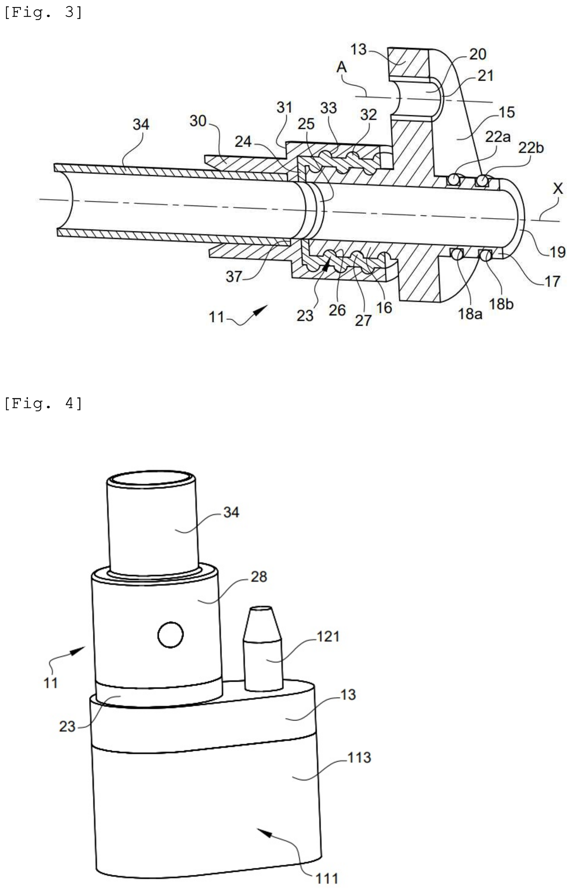

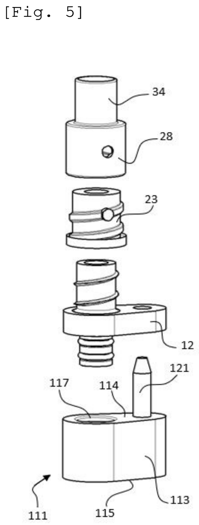

De préférence, la bague 23 n'est pas montée sur la base 12 puis la capsule 28 montée sur la bague 23. En effet, et de préférence, la capsule 28 est d'abord montée sur la base 12 puis la bague 23 est obtenue par surmoulage dans l'ensemble base 12 et capsule 28. A cet effet, la capsule 28 est par exemple pourvue d'au moins un orifice d'injection (visible ici aux figures 4 et 5) : une fois la capsule 28 en place sur la base 12, une matière liquide est par exemple injectée à travers l'orifice d'injection pour atteindre l'espace s'étendant entre la capsule 28 et la base 12.

Lorsque cette matière se solidifie, elle forme alors la bague 23 (moyennant optionnellement une étape d'usinage de finition).

De la sorte, la bague 23 est fabriquée relativement facilement.

De la sorte, la bague 23 est « chimiquement » liée à la capsule 28 d'une part et à la base 12 d'autre part.

De préférence, la portion d'attache 29, l'interface de connexion 30 et l'épaulement 31 sont d'un seul tenant. La capsule 28 est donc formée d'une seule pièce. La capsule 28 est ainsi par exemple obtenue par moulage.

De préférence, le premier connecteur 11 comporte également au moins une conduite 34. La conduite 34 est conformée en un tube rigide.

La conduite 34 est plus particulièrement ici agencée dans l'interface de connexion 30 de la capsule 28. La capsule 28, et plus particulièrement son interface de connexion 30, entoure donc extérieurement une première extrémité axiale de la conduite 34. En particulier, la capsule 28 entoure à 360 degrés la conduite 34 sur au moins un tronçon de celle-ci, incluant ladite première extrémité axiale de la conduite 34.

De préférence, un siège 37 est ménagé dans l'interface de connexion 30 afin que la première extrémité axiale de la conduite 34 puisse venir en appui contre ce siège 37. De la sorte, la conduite 34 n'est en contact qu'avec l'interface de connexion 30 dans le premier connecteur 11. En particulier, la conduite 34 n'est en contact ni avec la bague 23 ni avec la base 12. Le siège 37 est par exemple dessiné par un épaulement interne à l'interface de connexion 30. De préférence, le siège 37 est agencé au niveau de la première extrémité axiale de l'interface de connexion 30. De la sorte, la conduite 34 est agencée dans l'interface de connexion 30 sur une grande partie de la hauteur de l'interface de connexion 30. Le siège 37 est par exemple fabriqué par un alésage ménagé dans l'interface de connexion 30.

Ainsi, la conduite 34 s'étend axialement le long de l'interface de connexion 30 de sorte que sa première extrémité axiale repose sur le siège 37 de l'interface de connexion 30.

Par exemple, la conduite 34 s'étend axialement le long de l'interface de connexion 30 de sorte qu'une deuxième extrémité axiale de la conduite 34 s'étende au-delà de la deuxième extrémité axiale de l'interface de connexion 30 (et donc de la capsule 38).

La conduite 34 est de préférence agencée de sorte à s'étendre axialement selon un axe parallèle ou confondu avec le premier axe X. Dans le cas présent, la conduite 34 s'étend axialement selon le premier axe X. La conduite 34 et la capsule 28 s'étendent ainsi coaxialement l'un par rapport à l'autre. La conduite 34 est ainsi centrée sur la capsule 28.

La conduite 34 est par exemple au moins en partie en matière plastique. De préférence, toute la conduite 34 est en matière plastique. La matière plastique est par exemple en ou à base de nylon.

La conduite 34 est par exemple monocouche ou multicouche. Par exemple l'un au moins de la conduite 34 ou de la capsule 28 est dans un matériau thermoplastique.

La capsule 28 est par exemple surmoulée sur la conduite 34 et/ou soudée à la conduite 34 et/ou collée à la conduite 34 et/ou est d'un seul tenant avec la conduite 34 (i.e. la capsule 28 et la conduite 34 forment une unique et même pièce).

En cas de soudure et/ou de collage, les zones soudées et/ou collées appartiennent de préférence aux parois latérales en regard de la conduite 34 et de l'interface de connexion 30.

Si la conduite 34 est soudée à la capsule 28, la conduite 34 et/ou la capsule est de préférence dans une matière compatible avec un procédé de soudure visé (par exemple dans le cas d'un procédé de soudure par laser, la conduite 34 et/ou la capsule est dans une matière plastique transparente aux rayonnements laser) et/ou sont dans des matières compatibles entre elles par soudure.

La soudure est par exemple une soudure par friction et/ou une soudure laser.

Dans tous les cas, on comprend donc ici que la bague 23 est fixée à la capsule 28 d'une part et à la base 12 d'autre part. L'ensemble bague 23 + capsule 28 + base 12 forme donc un ensemble unitaire.

Les différents éléments décrits (et en particulier la bague 23) sont étanches au fluide transporté par le système de raccordement 10.

Par ailleurs, le premier orifice 19 s'étend successivement à travers la conduite 34, la capsule 28, la bague 23 et la base 12. Le premier orifice 19 présente ici le même diamètre sur toute sa longueur (considérée selon le premier axe X) lorsqu'il traverse chacun de ces quatre éléments. Le premier connecteur 11 ainsi décrit est pluri-matières avec notamment de l'élastomère pour la bague 23 et de la matière plastique pour la base 12 et la capsule 28. La bague 23 souple est ainsi implantée dans un ensemble (base 12 et capsule 28) plus rigide.

Une adhésion chimique est ainsi rendue possible entre la base 12, la bague 23 et la capsule 28 grâce au processus de fabrication de la bague 23.

Comme plus visible à la figure 5, le système de raccordement 10 comporte par ailleurs un deuxième connecteur 111. Le deuxième connecteur 111 comporte ici une bride 113 de fixation présentant deux faces principales 114, 115. De préférence, les deux faces principales 114, 115 sont parallèles entre elles. La bride 113 est ici de forme semi-ovale.

La bride 113 comporte par ailleurs une interface de connexion 117 : ladite interface de connexion 117 est ici conformé en un orifice s'étendant axialement à travers la bride 113 selon un axe qui est parallèle ou confondu au premier axe X lorsque les deux brides 13, 113 sont fixées entre elles.

L'interface de connexion 117 n'est pas ici centrée sur la bride 113. Par exemple l'interface de connexion 117 s'étend à partir d'une première extrémité longitudinale de la bride 113.

Dans les faits, lorsque les deux faces principales 14, 114 des deux brides sont en appui l'une contre l'autre, l'interface de connexion 17 de la base 12 est agencé à l'intérieur de l'interface de connexion tubulaire 117. Le deuxième connecteur 111 est donc ici un connecteur femelle et le premier connecteur 11 un connecteur mâle.

Les deux brides 13, 113 sont par ailleurs fixées entre elles de sorte à être solidaire l'une de l'autre. Par exemple, les deux brides 13, 113 sont fixées entre elles par un ensemble goujon/écrou. Par exemple, la bride 113 est munie d'un goujon 121 agencé pour traverser l'orifice 20 de la bride 13. Le goujon 121 est par exemple vissé dans la bride 113 de sorte à être solidaire de la bride 113. Le goujon 121 s'étend par exemple à partir de la face principale 114 en direction du premier connecteur 11.

Le deuxième connecteur 111 est au moins en partie en matière plastique. De préférence, tout le deuxième connecteur 111 est en matière plastique. La matière plastique est par exemple à base de ou en nylon. La matière plastique est par exemple un composite avec une matrice à base de plastique (nylon par exemple) renforcée de fibres (et par exemple des fibres de verre).

De manière avantageuse, le deuxième connecteur peut être un connecteur de l'art antérieur.

Le système de raccordement 10 décrit est par exemple implantable dans une installation de transport d'un fluide à moyenne pression soit pour des pressions allant de 35 et à 45 bars environ.

Un tel système de raccordement 10 est par exemple implantable dans une installation de transport d'un fluide réfrigérant comme par exemple dans une installation de climatisation.

Un tel système de raccordement 10 est par exemple implantable dans une installation de transport d'un fluide comme par exemple un véhicule terrestre comme par exemple une voiture.

Un tel système de raccordement 10 est par exemple implanté dans une installation de climatisation d'un véhicule terrestre.

Dans toutes les applications précitées, le fluide pourra être par exemple un fluide réfrigérant. Dans toutes les applications précitées, le fluide pourra être par exemple du dioxyde de carbone (formant alors un réfrigérant) et/ou de l'hydrogène et/ou un réfrigérant R1234yf et/ou un réfrigérant R1234ze et/ou un réfrigérant R123 et/ou un réfrigérant R1234, etc.

Si le fluide est de l'hydrogène, la bague 23 sera de préférence en ou à base de NBR ou de HNBR. Si le fluide est un réfrigérant, la bague 23 sera de préférence en ou à base d'EPDM.

Le système de raccordement 10 décrit présente de nombreux avantages.

Par exemple la base 12 assure une liaison rigide avec le deuxième connecteur 111.

Par exemple la base 12 permet au premier connecteur 11 de mieux résister aux sollicitations mécaniques (par exemple de pression et/ou de température).

Par exemple, la bague 23 permet de créer une liaison rigide entre la base 12 et avec une canalisation raccordée à la conduite 34.

Par exemple, la bague 23 permet au premier connecteur 11 de mieux résister aux sollicitations mécaniques (par exemple de pression et/ou de température).

Par exemple, les moyens d'accouplement permettent d'augmenter les surfaces d'adhésion entre la bague 23 et la base 12 d'une part et entre la bague 23 et la capsule 28 d'autre part.

Par exemple, les moyens d'accouplement permettent d'augmenter la résistance mécanique du premier connecteur 11. Par exemple, les moyens d'accouplement permettent de mieux répartir les contraintes sur la bague 23 (en traction et/ou en compression et/ou en cisaillement) et/ou les sollicitations en vibrations. Ceci ralentit le vieillissement de la bague 23.

Par exemple, les moyens d'accouplement permettent d'assurer une meilleure résistance de la bague 23 dans au moins une, et par exemple dans toutes, les directions de l'espace.

Par exemple, le premier connecteur 11 présente une bonne résistance aux vibrations. Ceci est particulièrement avantageux dans le cas où le système de raccordement 10 fait partie d'une installation de climatisation d'un véhicule terrestre. En effet, dans une telle installation le système de raccordement 10 est particulièrement exposé aux vibrations induites par un compresseur de l'installation de climatisation et/ou par un moteur du véhicule et/ou par une caisse du véhicule.

Par exemple, le système de raccordement 10 présente une meilleure endurance et/ou vieillit plus lentement.

Par exemple, le système de raccordement 10 est relativement peu coûteux à produire et à réparer.

Par exemple, le système de raccordement 10 permet de s'affranchir, au moins en partie, d'éléments de montage de l'art antérieur (type tube souple) qui vieillissaient vite et/ou étaient coûteux.

Par exemple, le système de raccordement 10 est plus aisé à monter dans une installation de transport de fluide.

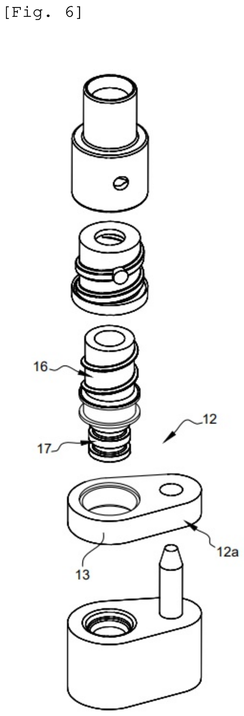

En référence à la figure 6, un deuxième mode de réalisation va être à présent décrit.

Alors que dans le premier mode de réalisation la base 12 était formée d'une seule pièce, dans le deuxième mode de réalisation, la base 12 est formée d'une première pièce 12a et d'une deuxième pièce 12b.

La première pièce 12a est ici formée par la bride 13. De préférence, la première pièce 12a est dans au moins en partie en métal. De préférence, toute la première pièce 12a est en métal. Le métal peut être par exemple en ou à base d'aluminium et/ou de fer et/ou d'acier inoxydable, La deuxième pièce 12b est ici formée par l'ensemble tube 16 + interface de connexion 17. De préférence, cet ensemble tube 16 + interface de connexion 17 est d'un seul tenant i.e. forme une unique et même pièce.

De préférence, la deuxième pièce 12b est dans au moins en partie en matière plastique. De préférence, toute la deuxième pièce 12b est en matière plastique. La matière plastique est par exemple en ou à base de nylon.

Les deux pièces 12a et 12b peuvent être fixées entre elles, pour former la base 12, par tout moyen connu et par exemple par surmoulage et/ou collage et/ou vissage et/ou moyens de fixation externe de type vis/écrou et/ou par soudage, etc. Mis à part ce qui vient d'être indiqué, tout ce qui a été dit pour le premier mode de réalisation est également applicable au deuxième mode de réalisation.

Bien entendu, l'invention n'est pas limitée aux modes de réalisation décrits mais englobe toute variante entrant dans le champ de l'invention telle que définie par les revendications.

Ainsi le premier connecteur et/ou le deuxième connecteur pourra être différent de ce qui a été indiqué.

Par exemple, bien qu'ici le premier connecteur comporte deux gorges, le premier connecteur pourra compoter une unique gorge ou un plus grand nombre de gorges que deux. Par exemple, bien qu'ici le premier connecteur comporte deux joints d'étanchéité (comme des joints toriques), le premier connecteur pourra compoter un unique joint d'étanchéité ou un plus grand nombre de joints d'étanchéité que deux.

Par exemple la deuxième extrémité axiale de la capsule pourra être plane et/ou bien être biseautée (avec de préférence un biseau en direction de l'intérieur de la conduite).

Bien qu'ici le rebord de la bague comme la face supérieure de l'extrémité axiale libre du tube de la base soient conformés en anneaux plats, ceci n'est pas limitatif et ledit rebord ou ladite face supérieure pourront présenter une autre forme. Par exemple, ladite face supérieure pourra être bombée en direction de la bague et/ou ledit rebord pourra être bombé en direction opposée à la bague. Ainsi au lieu d'être plan, le contact entre ledit rebord et ladite face supérieure pourra être surfacique et par exemple en partie hémisphérique.

Par ailleurs, bien qu'ici le rebord de la bague comme l'épaulement de la capsule soient conformés en anneaux plats, ceci n'est pas limitatif et ledit rebord ou ledit épaulement pourront présenter une autre forme. Par exemple, ledit épaulement pourra être bombé en direction opposée à la bague et/ou ledit rebord pourra être bombé en direction de l'épaulement. Ainsi au lieu d'être plan, le contact entre ledit rebord et ledit épaulement pourra être surfacique et par exemple en partie hémisphérique. Les moyens d'accouplement pourront être différent de ce qui a été indiqué. On pourra ainsi avoir un nombre de couples organe mâle/organe femelle différent de ce qui a été indiqué entre la base et la bague et/ou entre la bague et la capsule.

Les organes portés par un élément pourront alors être répartis (ou non) à intervalles réguliers le long dudit élément. Les organes mâles pourront optionnellement être portés par un même élément et les organes femelles par l'autre élément (ou inversement).

Indépendamment du nombre de couples organe mâle/organe femelle dans le connecteur associé, la forme d'au moins l'un desdits organes pourra être différente de ce qui a été indiqué.

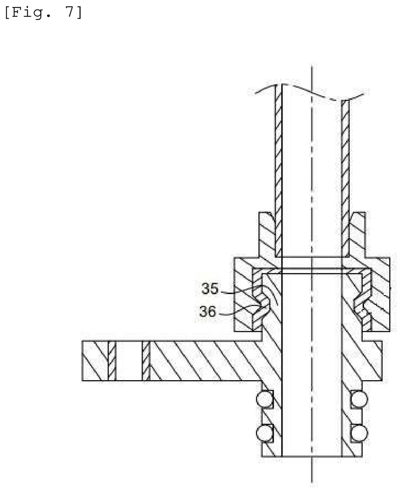

La figure 7 illustre ainsi une configuration dans laquelle au moins une gorge, formant un organe femelle 35, est une rainure de forme trapézoïdale et par exemple une rainure dont la section radiale est en trapèze et par exemple en trapèze régulier. De préférence, la forme du boudin, formant un organe mâle 36, est similaire à celle de la gorge le recevant. Ainsi dans le cas de la figure 7, le boudin associé à la gorge trapézoïdale présente lui-même une forme trapézoïdale.

Indépendamment du nombre de couples organe mâle/organe femelle dans le connecteur associé et de la forme de sa section radiale, bien qu'ici chaque organe mâle et chaque organe femelle s'enroule en hélice autour de l'élément le portant, au moins l'un des organes pourra être conformé différemment. Par exemple, au moins un des organes pourra être conformé en un anneau enroulé autour de l'élément le portant (l'anneau étant agencé de manière concentrique ou non à l'élément le portant). Une telle configuration est par exemple représentée à la figure 7. On pourra également avoir au moins un couple organe mâle/organe femelle de type engrenage avec des dents (les organes mâles) s'insérant dans des rainures (les organes femelles). L'engrenage pourra alors être circonférentiel et/ou axial. On pourra de manière générale avoir au moins un couple organe mâle/organe femelle (de type élément en relief/élément en creux) de type hélicoïdal et/ou en engrenage et/ou sinusoïdal (etc.) que ce soit dans la direction circonférentielle et/ou axiale et/ou radiale.

Bien qu'ici la bague ne comporte que des organes mâles, la bague pourra ne comporter que des organes femelles et/ou un mixte d'organes femelle et mâle. Une telle configuration est par exemple représentée à la figure 7.

La capsule et/ou la bague et/ou la base et/ou la conduite pourra être conformées de sorte que le premier orifice ne conserve pas une section transversale constante sur toute sa longueur.

Bien qu'ici la bague soit obtenue par surmoulage une fois la capsule et la base assemblées, la bague pourra être obtenue par surmoulage de l'une seule de la base ou de la capsule. La base pourra également être obtenue à part et assemblée ensuite sur la capsule et la base.

Bien qu'ici le deuxième connecteur soit un connecteur femelle et le premier connecteur un connecteur mâle, les rôles pourront être inversés de sorte que le premier connecteur comporte une interface de connexion tubulaire dans laquelle est reçu l'interface de connexion du deuxième connecteur.

Bien qu'ici les différents éléments décrits (bague, capsule, base) soient toujours d'une seule pièce dans le premier mode de réalisation, au moins l'un des éléments décrits pourra être en deux ou plusieurs pièces quel que soit le mode de réalisation décrit. Ceci pourra permettre de faciliter la fabrication globale du premier connecteur.

Par exemple la capsule pourra comprendre deux sous-capsules qui sont fixées entre elles ensuite (ou bien l'une sera surmoulée sur l'autre).

La conduite pourra être en ou à base de métal.

Les différents modes de réalisation pourront bien entendu être mixés entre eux.

## Revendications

1. Connecteur pour système de raccordement, le connecteur comprenant une base (12) comprenant une bride (13) prolongée par un premier côté d'un tube (16) et par un deuxième côté, opposé au premier côté, par une interface de connexion (17) destinée à être associée à un connecteur femelle du système de raccordement fluidique, **caractérisé en ce que** la base est au moins en partie en matière plastique et que le connecteur comporte une capsule (28), également au moins en partie en matière plastique, la capsule étant agencée sur la base, la capsule présentant ainsi une portion d'attache à la base prolongée par une interface de connexion, un orifice (19) étant ménagé dans le connecteur de sorte à traverser au moins la capsule et la base, au moins une bague (23) élastiquement déformable du connecteur étant agencée au moins en partie entre la capsule et la base, la capsule (28) n'étant agencée sur la base (12) que via la bague (23) de sorte qu'aucune portion de la capsule (28) ne soit en contact direct avec la base (12).

2. Connecteur selon la revendication 1, dans lequel la bague (23) est au moins en partie en élastomère.

3. Connecteur selon l'une des revendications précédentes, dans lequel la bague (23) et le tube (16) sont pourvus de moyens d'accouplement et/ou dans lequel la bague et la capsule (28) sont pourvus de leur moyens d'accouplement.

4. Connecteur selon la revendication 3, dans lequel les moyens d'accouplement comportent au moins un couple organe mâle/organe femelle, l'organe mâle étant porté par un premier élément choisi parmi la bague (23), le tube (16) ou la capsule (28) et l'organe femelle étant porté par un deuxième élément, différent du premier élément, deuxième élément choisi parmi la bague, le tube ou la capsule, sachant que soit l'organe mâle soit l'organe femelle est porté par la bague.

5. Connecteur selon la revendication 4, dans lequel l'organe mâle est conformé en un boudin apte à venir s'insérer dans une rainure formée par l'organe femelle.

6. Connecteur selon la revendication 4 ou la revendication 5, dans lequel la rainure est arrondie ou tronconique.

7. Connecteur selon la revendication 4 ou la revendication 5 ou la revendication 6, dans lequel l'organe mâle et/ou l'organe femelle s'enroule en hélice autour de l'élément le portant.

8. Connecteur selon l'une des revendications précédentes, comprenant une conduite (34) fixée à l'interface de connexion (30) de la capsule (28), la capsule entourant extérieurement un tronçon de ladite conduite.

9. Connecteur selon la revendication 8, dans lequel la conduite (34) est uniquement en contact avec la capsule (28) dans le connecteur.

10. Connecteur selon l'une des revendications précédentes, présentant un jeu entre la bague (23) et la bride (13) d'une part et entre la capsule (28) et la bride d'autre part.

11. Connecteur selon l'une des revendications précédentes, dans lequel la capsule (28) ne repose sur la base (12) que par l'intermédiaire de la bague (23).

12. Système de raccordement comprenant un connecteur selon l'une des revendications précédentes, le connecteur étant un premier connecteur, et un deuxième connecteur inséré dans ledit premier connecteur.
